# EUROPEAN PATENT SPECIFICATION

(11) **EP 0 299 757 B1**
(45) Date of publication and mention of the grant of the patent: **01.06.1994**
(21) Application number: 88306437.0
(22) Date of filing: 14.07.1988
(51) Int. Cl.: B05B 7/02, B05B 7/04, B05B 7/14

(54) **Atomisers**
Zerstäuber
Pulvérisateurs

(30) Priority: 14.07.1987 US 73043
(43) Date of publication of application: 18.01.1989
(73) Proprietor: THE BABCOCK & WILCOX COMPANY, New Orleans, Louisiana 70160 (US)
(72) Inventor: Bailey, Robert T., Uniontown Ohio 44685 (US); Vetterick, Richard C., Akron Ohio 44313 (US); Myers, Robert B., Copley Ohio 44321 (US)
(74) Representative: Cotter, Ivan John

(56) References cited:
- EP-A- 0 117 472
- EP-A- 0 172 303
- EP-A- 0 232 495
- DE-A- 3 609 960
- FR-A- 2 488 815
- US-A- 3 650 476
- US-A- 3 929 290
- US-A- 4 356 970

## Description

This invention relates to atomisers.

Several types of atomiser are known. A text which discusses atomisation as it is applied to spray drying is Spray Drying Handbook, Third Edition, K. Masters, published in 1979 by George Godwin Limited, London, England, especially Chapter 6 thereof.

Atomisers for combining liquid with a high velocity gas stream have been known for many years. US Patent No. US-A-1 373 525 (Payne) discloses an atomiser for an oil burner which has a cylindrical mixing chamber that carries a supply of air and into which oil can be introduced by obliquely extending pipes. US-A-2 931 580 (Johnson) discloses the use of a small mixing chamber where air and fluid are brought together. A relatively long pipe carries the mixture to a nozzle. US-A-3 010 660 (Barrett) discloses an atomiser for use in a snow making machine where a length of pipe carries a water-air mixture to a nozzle.

US-A-3 623 669 (Woods) teaches the confluence of two fluid streams and one gas stream into a chamber for discharge through a disposable nozzle which is particularly suited for spraying paints or chemicals.

US-A-3 712 681 (Marino et al) teaches that a slurry can be propelled by pressurised water and air, through a pipe to a discharge nozzle. The length of the pipe is specified as being from 0.3 to 3.0 m (one to ten feet) long.

Liquid fuel atomisers for atomising fuel oil and the like are known from US-A-3 650 476 (Rackley et al) and US-A-3 929 290 (Tallarovic), assigned to the present applicants. Both of these patents teach the use of a central supply tube which is supplied with one of the fluids to be combined by the atomiser. The central tube is surrounded by an outer tube which defines an annular space with the central tube. This space conveys the other of the two fluids to be combined. Near the end of the tubes, a mixing chamber is formed where the two fluids are combined at a high velocity. A cap covers the mixing chamber. Apertures through the cap provide passages for the exiting atomised spray. Neither of these patents, however, teaches the use of an elongate cylindrical mixing chamber where the two fluids are combined together at a critical distance from the cap.

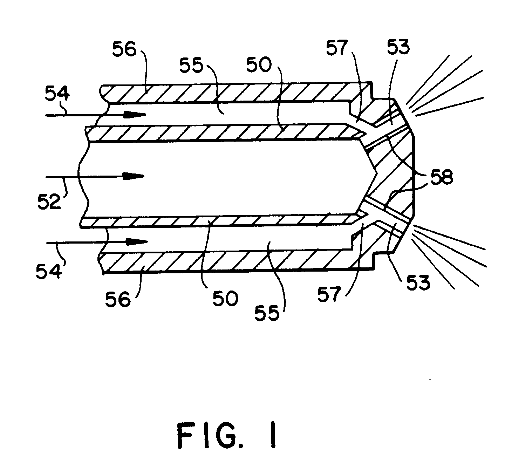

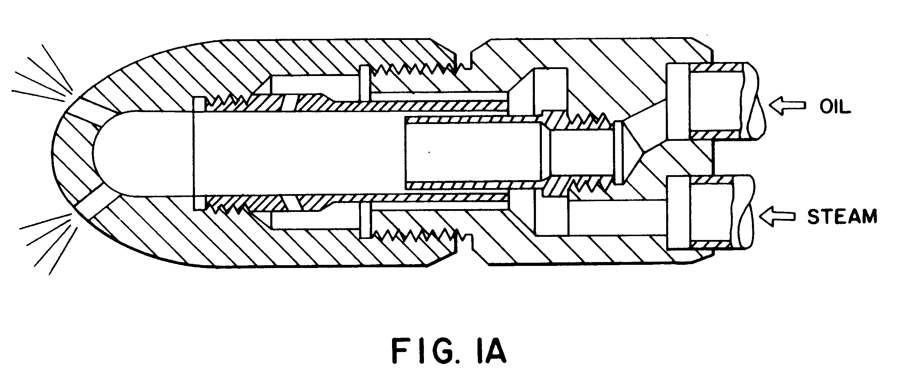

Atomisers have been used in the petrochemical industry to atomise pitch containing carbon particles up to 7.94 mm (5/16 inch) diameter utilising a central mixing chamber into which atomising steam is injected. An example of such an atomiser is shown in Figure 1A of the accompanying drawings.

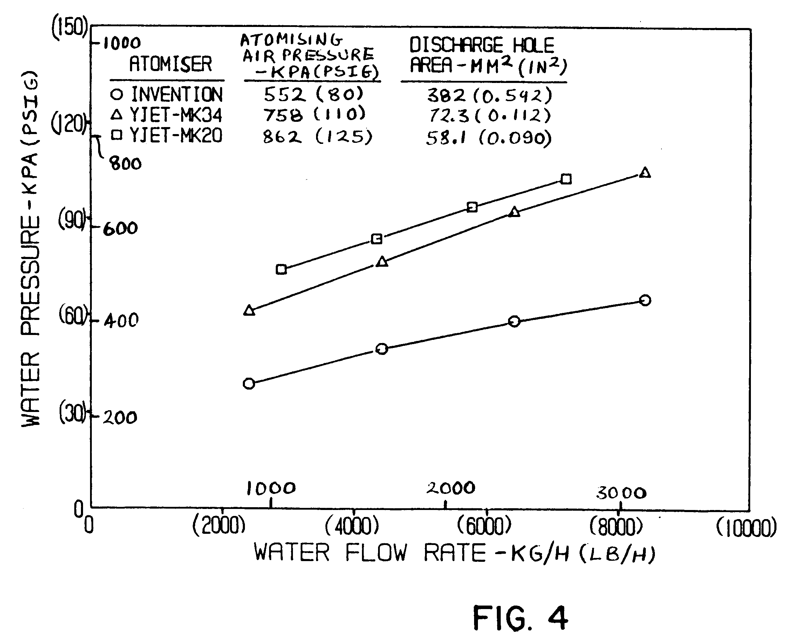

A process involving the dry scrubbing of stack gases for the removal of sulphur dioxide requires atomisers for spraying a slurry of alkaline reactants into the stack gases. The present applicants, having had considerable experience with atomisers for liquid fuels, have applied this technology to the atomisation of alkaline reactants for the dry scrubbing of stack gases. However, the atomisation of a slurry having both liquid and solid granular components poses unique problems. Four technical papers presented by The Babcock and Wilcox Company discuss the evolution of the dry scrubbing process and the use of specially designed atomisers for that process. The first of these, entitled "DRY SCRUBBING ELIMINATES WET SLUDGE", by Hurst, presented 7-11 October 1979 to Joint Power Generation Conference, Charlotte, N.C., USA, discusses a demonstration plant which was built and operated using a Y-jet atomiser which was originally designed for liquid fuel. A paper entitled "CONTROL OF SO₂ EMISSIONS BY DRY SCRUBBING" by Downs et al, presented 21-23 April 1980 to American Power Conference, Chicago, Illinois, USA, discusses some drawbacks of the atomisers used at that time for the dry scrubbing process. "DRY SCRUBBER DEMONSTRATION PLANT - OPERATING RESULTS", by Hurst et al, presented 28-31 October 1980 to EPA Symposium on Flue Gas Desulfurization, Houston, Texas, USA, discloses performance of the dry scrubbing process utilising atomised slurry. "DRY SO₂ SYSTEM DESIGN IN EARLY OPERATING EXPERIENCE AT BASIN ELECTRIC'S LARAMIE RIVER STATION", by Anderson et al, presented 3-6 October 1982 to Thirty-second Canadian Conference, Vancouver, British Columbia, Canada, discloses details of the flue gas distributor structure used around the atomising nozzle for the dry scrubbing process. Finally, a paper entitled "COMPARISON OF DRY SCRUBBING OPERATION OF LARAMIE RIVER AND CRAIG STATIONS", by Doyle et al, presented 16-21 November 1986 to Symposium on Flue Gas Desulfurization Atlanta, Georgia, USA, describes two commercially operating dry sulphur removal (DSR) systems in which an atomiser embodying the present invention (as described in outline on page 2 and in Figure 4 thereof) was successfully (and confidentially) operated to provide superior atomisation while reducing pluggage potential, enhancing the operation of the DSR units.

In general, dual fluid atomisers can be sub-divided on the basis of location where gas and liquid components are mixed together. An external mix dual fluid atomiser passes gas and liquid streams through separate flow passages inside the atomiser. The two fluids are mixed together externally of the atomiser hardware by impinging jets of the two fluids against each other. An internal mix dual fluid atomiser, on the other hand, mixes the fluids internally of the atomiser hardware and discharges them through a common flow passage.

When a liquid which is laden with suspended solid particles (a slurry) is to be atomised, the choice of atomiser is limited by practical constraints. These constraints include flow capacity, the required size of droplets in the atomised spray, the size of the flow passages to pass the particles in the slurry, the physical durability of the atomiser parts, the sensitivity of the quality of the atomised spray to component dimensional changes, and commercially acceptable energy requirements to produce the atomized spray.

The atomisers disclosed in US-A-3 650 476 and US-A-3 929 290, cited above, are of the dual fluid internal mix type. These atomiser designs provide the finest droplets. They utilise a gaseous atomising medium, such as air or steam, which is accelerated through a small diameter passage to establish a high velocity. The high velocity gas is mixed with the fluid, and the gas/fluid mixture is discharged through a flow passage as an atomised spray. The atomiser disclosed in US-A-3 650 476 is commonly referred to as the T-jet type. The slurry atomisers disclosed in the technical papers identified above are commonly referred to as Y-jet atomisers. Slurry is sent through a central tube to a nozzle head having diverging nozzle passages. Air or steam is sent through an annular chamber around the central tube to entry ports in the nozzle passages positioned just downstream of the passage entry for the slurry. Up until now, the largest discharge port size that has been successfully tested is in the range of 4.915 mm (0.1935 inches) in diameter while the most consistent performance utilises port sizes of only 3.912 mm (0.1540 inches) in diameter.

This limitation on port sizes leads to clogging problems. Atomisation was poor in general and the wear rates were excessive, due to the highly abrasive properties of the slurry.

In response to these problems, the present inventors designed an atomiser using discharge nozzles attached by a 2.74 or 3.05m (nine or ten foot) barrel to a dual fluid mixing chamber, located at the opposite end. However, problems in this design also were noted in the field. In particular, atomisation was poor due to an inadvertent separation of the slurry. The slurry apparently became separated during its passage along the barrel from the rear mixing chamber to the nozzles located at the opposite end. The upwardly pointed nozzles produced extremely fine spray droplet sizes while the downwardly pointing nozzles had large droplet sizes which were unacceptable. Since droplet size is extremely important in dry scrubbing applications, and the desired droplet size is extremely small, in the range of 75 to 80 micrometres mass median diameter or better, an atomiser design which had high capacity, fine atomisation, and low energy requirements was needed.

Patent Specification EP-A-0 117 472 discloses an atomiser for a liquid fuel burner, which liquid may include two phase mixtures such as coal-fuel oil or coal-water, wherein the liquid fuel is supplied to a spray head centrally thereof and an atomising fluid is supplied under pressure to peripheral ducts, which communicate obliquely with the central duct, to propel the mixed fuel and atomising fluid into a mixing chamber and out of the mixing chamber through oblique passages which lead to a fire box and are provided in a wall opposite the central duct.

According to one aspect of the invention there is provided an atomiser for mixing together and atomising at least two fluids, the atomiser comprising:
a mixing chamber housing defining a mixing chamber with an open entry end for receiving one of said fluids and an open discharge end, the mixing chamber having an axis and an inside diameter, and the mixing chamber housing having at least one entry port for admitting the other fluid into the mixing chamber, the entry port extending towards said axis of the mixing chamber at an angle and being spaced upstream from said discharge end and downstream of said entry end with respect to a flow of the first fluid along said axis;
a volume chamber communicating with and adjacent to said discharge end of the mixing chamber, the volume chamber having a diameter which is larger than the inside diameter of the mixing chamber, the volume chamber being defined by a spray head engaged around the discharge end of the mixing chamber and having a conical inner surface defining part of the volume chamber and an end cap having a conical recess therein defining another part of the volume chamber and engaged over the spray head and having at least one atomising nozzle having an entry end communicating with the volume chamber and being disposed outside a periphery of said discharge end of the mixing chamber, said entry end of said at least one nozzle having a centre point lying on a circle centred on said axis, the diameter of said circle being perpendicular to said axis and larger than the sum of the inside diameter of the mixing chamber and the inside diameter of said at least one nozzle, the conical surface of the spray head intersecting the inside surface of the end cap at a tangential circle which encompasses the outside edge of the entry end of the at least one nozzle by a tolerance of up to 6.35mm; and
whereby the first and second fluids are mixed together in the mixing chamber to form a thoroughly homogenised mixture that passes into the volume chamber and impacts against an impact surface defined on the end cap in the conical recess and extending substantially perpendicular with respect to said axis, the impact surface being on a side of the volume chamber opposite the discharge end of the mixing chamber, and is atomised through said at least one nozzle, said impact surface being spaced from said discharge end by an amount equal to about one to three times the inside diameter of the mixing chamber.

According to a second aspect of the invention there is provided an atomiser comprising: a housing defining a cylindrical mixing chamber having an inside diameter, an open entry end for a slurry or fluidised dry power, and an open discharge end, the housing having a plurality of ports extending at an angle of 45° with respect to an axis of the mixing chamber into the mixing chamber, the ports being spaced upstream of said discharge end by from one to five times the inside diameter of the mixing chamber and being spaced downstream of said entry end; a spray head engaged around said discharge end and having a conical inner surface partially defining a volume chamber having a diameter which is larger than the diameter of the mixing chamber communicating with said discharge end; and an end cap having a conical recess therein engaged over the spray head for enclosing the volume chamber, the end cap having a plurality of nozzles extending therethrough, the nozzles communicating with the volume chamber, and the end cap having an impact surface around which the nozzles are distributed, said impact surface being spaced from said discharge end by at least one mixing chamber diameter and extending substantially perpendicular to said axis of the mixing chamber;
wherein each of the nozzles has an entry end with a centre, said centres of the entry ends of the nozzles lying outboard of a circle having a diameter at least equal to the inside diameter of the mixing chamber plus an inside diameter of one of the nozzles; and wherein the conical inner surface of the spray head surface has a circle of intersection with the end cap which at least encompasses outer edges of said entry ends of the nozzles.

A preferred embodiment of the invention described in detail below provides an atomiser which produces efficient and consistent atomised sprays, is not susceptible to (or at least has good resistance to) pluggage, and has an acceptable wear life. The preferred atomizer is of the dual fluid type. It can, for example, be used to mix together and atomise gaseous, liquid and solid components; and is particularly useful as a slurry atomiser. One unique characteristic of the preferred atomiser resides in the use of large size flow passages and in their arrangement. The large passageways allow the utilisation of low fluid velocities, thus reducing pressure requirements. This also allows the passage of grit particles without clogging and at the same time produces fine atomisation of a liquid fraction. The preferred dual fluid atomiser can be described as a 3-phase atomiser in that a gas, a liquid and a solid can pass through concurrently. The atomiser produces a fine mist of liquid and a uniform distribution of solid particles, or in cases where liquid is not utilised (such as a powder fluidised in a gas) the atomiser produces a fine and uniform distribution of powder particles. The use of low velocities also reduces wear by minimising erosion. High velocities are utilised only at exit ports of nozzles where the atomised spray is formed. Critical dimensional and positional parameters are observed to provide maximum efficiency in the formation of the atomised spray, while minimising wear and tendency for pluggage.

An atomiser according to the invention can have the same or larger slurry capacity than previously proposed atomisers, while using atomisation gas and fluid flows at lower supply pressures. Such an atomiser still provides quality atomisation despite the savings in energy and wear. Larger flow areas are utilised to reduce the velocities inside the atomiser and thus reduce unrecoverable pressure loss.

These advantages are commercially significant since they provide higher capacity ranges at lower energy and lower maintenance costs. Cleaning and inspection is required less frequently since the atomiser is not susceptible to clogging and pluggage. This is because of the lack of tortuous flow paths inside the atomiser and the use of large flow areas as indicated above.

Quality atomisation can for example be achieved with 207 to 552 kPa (30 to 80 bf/in2 or psi) atomising gas pressure (compressed air or steam) and 69 to 414kPa (10 to 60 psi) fluid pressure. This permits the use of lower power compressors and pumps, representing another saving.

The fact that higher capacities can be achieved with the preferred atomiser described below means that fewer atomisers are required for a given process. This is particularly useful in dry scrubbers where fewer atomisers represent an additional cost saving both in hardware and maintenance.

The invention will now be further described, by way of illustrative and non-limiting example, with reference to the accompanying drawings; in which:
Figure 1 is an axial sectional view showing a head and nozzle area of a previously proposed Y-jet type atomiser;
Figure 1A is an axial sectional view showing a head and nozzle area of a second previously proposed atomiser;
Figure 2 is an axial sectional view of an atomiser embodying the invention;
Figure 3 is an enlarged sectional view showing a head and nozzle area of the atomiser embodying the invention;
Figure 4 is a graph showing atomisation pressure versus flow for the atomiser embodying the invention and two previously proposed atomisers; and
Figure 5 is a graph showing mass median diameter of atomised droplets (micrometres) versus air-to-water flow ratio for the atomiser embodying the invention and two previously proposed atomisers.

A previously proposed atomiser known as the Y-jet atomiser is shown schematically in Figure 1. The atomiser comprises an inner barrel 50 for conveying a flow 52 of slurry to a plurality of atomising nozzles 53. An atomising gas 54 such as air or steam flows in an annular passage 55 defined between the inner barrel 50 and an outer barrel 56. The atomising gas (e.g. air) is supplied through angled air passages 57 into the base of the nozzles 53.

For efficient atomisation, an upper limit for the inside diameter of the nozzles 53 in this atomiser has been found to be about 4.915mm (0.1935 inches), which is equivalent to a No. 10 twist drill size. This relatively small diameter, in addition to the even smaller diameter for the air passages 57, makes the Y-jet atomiser quite susceptible to clogging and pluggage when a slurry is involved. High velocities are used to obtain proper atomisation. However, high velocities mean that the internal parts of the atomiser are especially susceptible to wear. One measure which was taken to locally reduce wear was to line the nozzle 53 with wear resistant inserts 58. This, however, does not solve the clogging problem, nor does it in any way reduce the energy requirements for this atomiser.

It is noted that, in practice, the atomiser of Figure 1 is actually made of multiple parts which are threaded together rather than the single part shown.

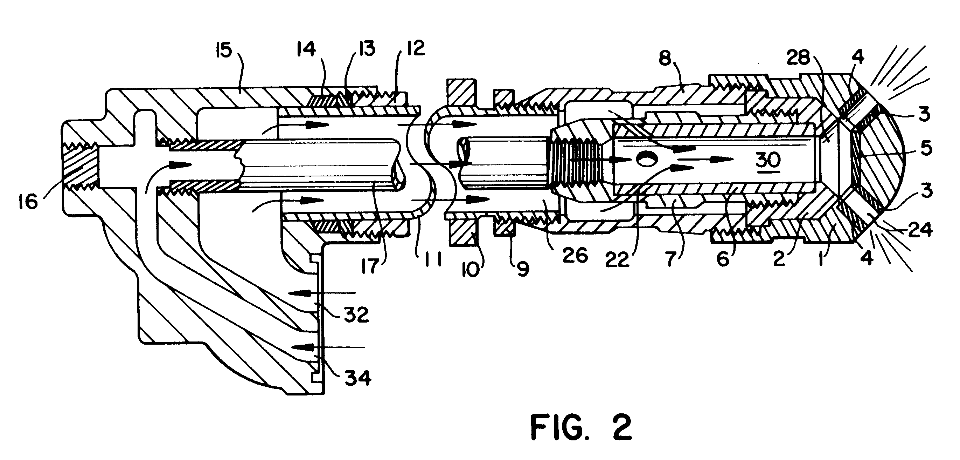

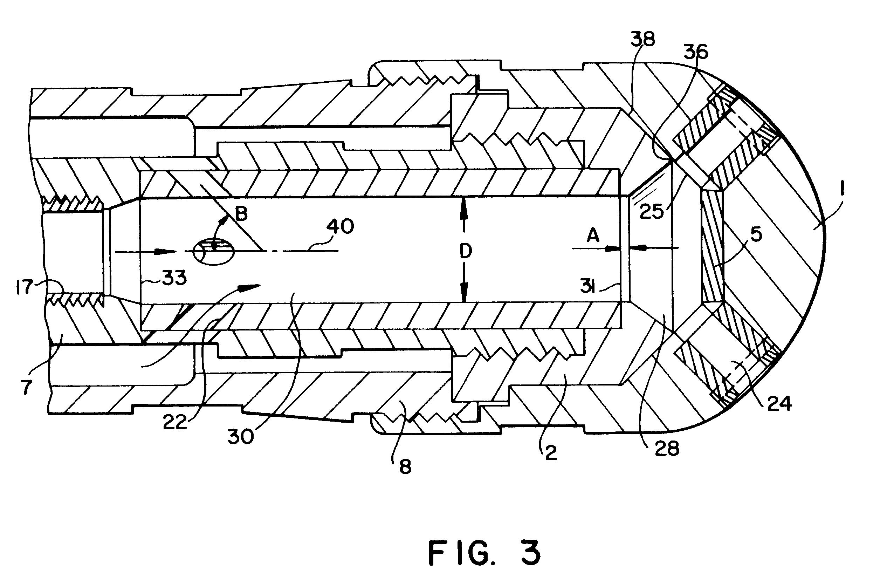

Figures 2 and 3 show an atomiser embodying the invention which is particularly suited for atomising a slurry of liquid-borne particles, or a fluid of gas-borne dry powder particles, with an atomising gas such as air or steam.

The atomiser shown in Figures 2 and 3 comprises an end cap 1 which carries a plurality of discharge nozzles 24, each having a wear resistant insert or liner 4 which is retained by a threaded retainer 3, threaded into the end cap 1. The interior of the end cap 1 is hollowed to partially form a volume chamber 28 which is bounded at its sides by a sprayer head 2. The end cap 1 also carries a wear resistant pad 5.

A mixing chamber housing 7 is threaded into the sprayer head 2 and defines an interior cylindrical mixing chamber 30 which is lined by a wear sleeve or insert 6. The chamber 30 has opposite open ends. The left hand end communicates with the open end of an inner barrel 17 which carries slurry or fluidised dry powder into the chamber 30. The opposite (right hand) end of the chamber 30 communicates with the volume chamber 28.

The nozzle inserts 4, the wear pad 5, and the wear sleeve 6 are advantageously made of wear resistant materials, such as ceramics or hardened steel. Silicon carbide is an example of one such ceramic material. It should be noted, however, that the selection of the particular material (i.e. hardened steel alloys or ceramics) for any of the wear resistant elements (4,5, and 6) is based entirely on its intended use and application.

To reduce manufacturing costs, the wear resistant elements 4, 5, and 6, if made of ceramic materials, may be advantageously coated with a castable material such as rubber, to ease manufacturing tolerances and machining requirements as needed. Typical as-manufactured tolerances for ceramic wear materials generally are in the range of +0.794mm (+1/32 inches). Those rubber coated, wear resistant surfaces in direct contact with the homogenised slurry will have their rubber coatings quickly removed when the atomiser is in use.

Atomising gas ports 22 extend through the housing 7 and wear sleeve 6 into the chamber 30. Advantageously, four evenly distributed gas ports 22 are utilised, the ports being spaced around the circumference of the wear sleeve 6. An adapter coupling 8 surrounds and is spaced outwardly from the mixing chamber housing 7 to define an annular space for the flow of atomising gas, such as air or steam. The adapter coupling 8 is threaded at one end into the end cap 1 and has a shoulder for retaining the head 2 against an inner surface of the end cap 1.

The opposite end of the adapter coupling 8 is threaded onto an outer barrel 11. A lock nut 9 fixes the position of the adapter coupling 8 on the outer barrel 11. A split ring collar 10 extends around the outer barrel 11 and is used for supporting the outer end of the atomiser.

The inner end of the atomiser (to the left in Figure 2) comprises an atomiser body 15 which has passages therein for the slurry (or fluidised dry powder) and for the atomising gas.

Atomising gas is admitted through an entrance port 32 into the atomiser body 15 and the slurry or fluidised dry powder is admitted through an entrance port 34 into the atomiser body15.

An axial passage through the atomiser body 15 is closed at the left by a pipe plug 16 and has threads at the right for receiving one threaded end of the inner barrel 17. The opposite threaded end of the barrel 17 is threaded into the mixing chamber housing7.

An annular gas passage 26 communicates with the port 32 and is defined between the inner and outer barrels 17,11.

The outer barrel 11 is held in a receiving bore of the atomiser body 15 by mechanical packing 14 which is compressed by a follower ring 13 and a packing gland 12 threaded into the open end of the atomiser body 15.

The flow passages, ports and nozzles of the present atomiser have relatively large flow areas. In particular, nozzle 24 inside diameters of 12.7mm (1/2inch) have been used successfully while still achieving good atomisation. Slurry or fluidised dry powder, at relatively low velocities, is supplied to the port 34 and flows through the inner barrel 17 and into the inlet end of the chamber 30. Here, the slurry or fluidised dry powder is homogenised with the atomising gas supplied through the ports 22 from the annular passage 26 and the port 32.

The homogenised mixture of atomising gas and slurry (or fluidised dry powder) moves axially through the cylindrical chamber 30 and impacts against the wear pad 5. The homogenised mixture then passes through the discharge nozzles 24 and is subjected to rapid expansion which produces a fine droplet/particle atomisation.

Oversized particles that are contained in the slurry, for whatever reason, can flow easily through the relatively large atomising nozzles 24 without obstruction. Despite this, the liquid fraction is finely atomised into small particles which are typical of the dual fluid Y-jet atomiser. In actual tests, nozzles 24 having inside diameters of 12.7mm (0.5 inch), over 6.5 times larger than previously proposed nozzles, have successfully produced atomised sprays of high quality.

Poor atomisation due to clogging is virtually eliminated by the unique arrangement of the atomising gas ports 22 that all communicate with the mixing chamber 30, and by the single large open end of the mixing chamber inlet end allowing for an unrestricted flow path for the slurry. The atomising gas ports 22 are sized such that gas velocity is well below sonic velocity (that velocity at which the sound waves restrict the gas flow). Should any atomising gas port 22 become clogged, the atomising gas will redistribute itself through the remaining gas ports 22, allowing the homogenised mixture in the mixing chamber 30 to maintain proper proportions of fluid and gas for all of the mixture.

In the present atomiser, high velocity jets of atomising gas are not required for staged atomisation in order to ultimately achieve high capacity, fine atomisation of the fluid. It has been discovered that the requirement of the initial mixing is to develop a uniform and thoroughly homogeneous fluid from which fine atomisation is achieved by rapid expansion across the discharge nozzles. Further, once the two fluids are thoroughly, uniformly and homogeneously mixed, it is important not to allow separation to occur, nor to allow stagnant volumes which allow phase separation by gravity.

For the present atomiser to operate properly, however, certain critical dimensional relationships should be observed.

Referring to Figure 3, the cylindrical mixing chamber 30 should have a discharge end 31 which is adjacent to the volume chamber 28. This is shown by a dimension A in Figure 3. A value of A = 6.35 mm (0.25 inches), chosen solely to facilitate the mechanical design, has been shown to be acceptable. The surface of the wear pad 5 preferably extends substantially perpendicular to the axis 40 of the chamber 30 (which is also the direction of flow for the resulting homogenised mixture).

The distance between the discharge end or opening 31 and the striking surface of the wear pad 5 should be from one to three times the inside diameter of the mixing chamber 30. This inside diameter is shown at D in Figure 3.

The atomising gas ports 22 are located such that detrimental phase separation of the homogeneous mixture does not occur prior to discharge from the chamber 30 into the volume chamber 28. Acceptable results can be achieved when the atomising gas ports 22 are positioned from one to five times D upstream of the discharge end 31 of the chamber 30. The ports 22 can either be one or more holes as shown (and preferably four holes) or may be in the form of one or more openings or flow passages into the chamber 30.

The angle B which the axis of the port or ports 22 makes with the axis 40 of the chamber 30 can range from 10° to 170°, the particular angle B being chosen such that thorough mixing is achieved without excessive pressure drop. Satisfactory results have been achieved with four ports at an angle B of 45°.

The total cross-sectional area of the ports 22 should be selected so that a velocity of from 30.5 to 152.4 m/s (100 to 500 ft/s) is obtained for the atomised gas.

The slurry inlet 33 of the chamber 30, as well as the discharge end 31, extend along the centre line or axis of the chamber 30. The slurry inlet 33 is preferably located upstream of the atomising gas ports 22, though this is not essential for practicing the invention. The size of the slurry inlet 33 must be selected so that fluid velocity is within the range of 0.15 to 9.0 m/s (0.5 to 29.5 ft/s).

The inside diameter D of the mixing chamber 30 is selected to keep the homogenised mixture in the velocity range of 30.5 to 91.4 m/s (100 to 300 ft/s).

The size and number of discharge nozzles 24 is adjusted to meet capacity requirements. The number and arrangement of the outlets of the nozzles 24 are set to meet designers' needs. Location of an entrance end 25 of each of the nozzles 24, however, is critical in relation to the mixing chamber discharge. The diameter of a circle centred on and substantially perpendicular to the axis 40, and encompassing centre lines of the entrance end 25 of the nozzles 24, must be greater than the combined sum of one times D, but no more than three times D, plus the diameter of one discharge nozzle 24. This places the entrance end 25 of each of the nozzles 24 outside the periphery of the discharge end 31 of the mixing chamber 30. The location of the wear pad 5 with respect to the entrance end 25 of the nozzles 24 is chosen so that good atomisation is achieved.

The shape of the sprayer head 2 is also important. The inside surface of the sprayer head 2 which partially defines the chamber 28 (and is shown as being conical in Figure 3) should intersect the inside surface of the end cap 1 at a tangential circle 36 which encompasses the outside edge of the inlet openings 25 for the nozzles 24. This circle of intersection 36 must be within 6.35 mm (0.25 inches) of the outer edge of the inlet openings 25, however, to prevent local segregation of the mixture which can result in poor atomisation.

The mating tapered outside surfaces of the sprayer head 2 and end cap 1, which are shown at 38 in Figure 3, should be accurate to within +0.5° to seal the cap 1 to the head 2.

The volume chamber 28 is further limited in diameter to minimise stagnant zones which lead to phase segregation of the homogenised mixture. The radius of the chamber 28 from the axis 40 to an outermost region of the chamber should be no greater than two times D (the inside diameter of the cylindrical chamber 30).

By observing some or all of the foregoing critical features, improved atomisation is achieved over the previously proposed atomisers.

Figure 4 shows test results where all of the critical features were met for the atomiser embodying the invention. Figure 4 is a graph relating the atomisation pressures to flow rate and shows the results of the atomiser embodying the invention by points represented by circles. Results for two versions of a previously proposed Y-jet atomiser (designated MK34 and MK20) are also shown at points represented by triangles and squares respectively.

The previously proposed designs require an atomising gas supply pressure (gauge) of 758 or 862 kPa (110 or 125 lbf/in² or psi), while the present atomiser requires only 552 kPa (80 psi). This represents a reduction of 207 or 310 kPa (30 or 45 psi). Also, at a flow rate of 2687 kg/h (7200 lb/h), the fluid pressure is 655 or 717 kPa (95 or 104 psi) in the previously proposed atomisers. According to the present atomiser, only 414 kPa (60 psi) is needed, at this flow rate, which is a reduction of 207 or 303 kPa (30 or 44 psi).

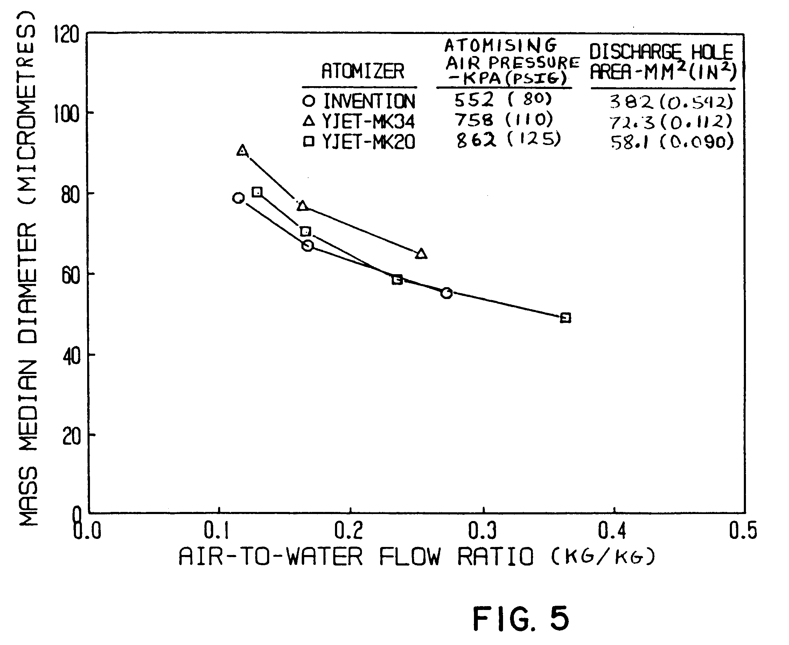

According to the present atomiser, an atomising gas pressure drop of only about 138 to 172 kPa (20 to 25 psi) is produced across the cylindrical chamber 30. The balance of the pressure drop is "saved" so that it can be used at the nozzles 24 to ensure good atomisation. A pressure drop of only about 379 kPa (55 psi) is utilised across the nozzles 24. This relatively low loss of pressure represents an energy saving. This is significant in view of the fact that the quality of the atomised spray is retained or even exceeded with respect to the previously proposal, as is shown in Figure 5. In addition, and with further reference to Figure 5, the present atomiser achieves the same or better atomisation (as measured by mass median diameter of the droplets) at the same gas to liquid ratio (kg per kg or lb per lb), which represents an important energy saving.

It is to be noted that the supply of atomising gas and slurry (or fluidised dry powder) to the ports 32 and 34 can be reversed if desired. The wear elements 4, 5 and 6 can also be made as one part with the end cap and housing structures.

The present atomiser thoroughly mixes the two fluids to achieve a homogenised mixture utilising low pressure drop (and consequently lower energy requirements) and maintains a homogenised mixture throughout the atomising process. This is in contrast to other previously proposed atomising assemblies such as the Y-jet or T-jet.

In both the Y-jet and T-jet designs, high velocities in the mixing region were used for the first stage atomisation of the two fluids, which, for a given capacity, required a plurality of small ports. As was previously indicated, problems with pluggage and capacity were encountered. As port size was increased to overcome these problems, the thoroughness of mixing of the two fluids deteriorated, resulting in poor atomisation quality and uniformity.

It has been found that good homogenisation is a prerequisite for good atomisation. The present atomiser is successful in achieving thorough homogenisation at lower velocities and pressure drop than the previously proposed assemblies, due to the unique geometrical configuration of the apparatus. Further, since the present atomiser can achieve thorough mixing at low velocities and still achieve high capacities, the atomiser is relatively insensitive to dimensional variations due to manufacturing tolerances or wear.

While a specific embodiment of the invention has been shown and described in detail by way of example, it will be understood that the invention may be embodied otherwise. For example, several rows of nozzles 24 can be placed in the sprayer head 2, arranged in symmetrical or a symmetrical pattern.

## Claims

1. An atomiser for mixing together and atomising at least two fluids, the atomiser comprising:
a mixing chamber housing (7) defining a mixing chamber (30) with an open entry end (33) for receiving one of said fluids and an open discharge end (31), the mixing chamber (30) having an axis (40) and an inside diameter (D), and the mixing chamber housing (7) having at least one entry port (22) for admitting the other fluid into the mixing chamber (30), the entry port (22) extending towards said axis (40) of the mixing chamber (30) at an angle (B) and being spaced upstream from said discharge end (31) and downstream of said entry end (33) with respect to a flow of the first fluid along said axis (40);
a volume chamber (28) communicating with and adjacent to said discharge end (31) of the mixing chamber (30), the volume chamber (28) having a diameter which is larger than the inside diameter (D) of the mixing chamber (30), the volume chamber (28) being defined by a spray head (2) engaged around the discharge end (31) of the mixing chamber (30) and having a conical inner surface defining part of the volume chamber (28) and an end cap (1) having a conical recess therein defining another part of the volume chamber (28) and engaged over the spray head and having at least one atomising nozzle (24) having an entry end (25) communicating with the volume chamber (28) and being disposed outside a periphery of said discharge end (31) of the mixing chamber (30), said entry end (25) of said at least one nozzle (24) having a centre point lying on a circle centred on said axis (40), the diameter of said circle being perpendicular to said axis (40) and larger than the sum of the inside diameter (D) of the mixing chamber and the inside diameter of said at least one nozzle (24), the conical surface of the spray head (2) intersecting the inside surface of the end cap (1) at a tangential circle (36) which encompasses the outside edge of the entry end of the at least one nozzle (24) by a tolerance of up to 6.35mm; and
whereby the first and second fluids are mixed together in the mixing chamber (30) to form a thoroughly homogenised mixture that passes into the volume chamber (28) and impacts against an impact surface (5) defined on the end cap (1) in the conical recess and extending substantially perpendicular with respect to said axis (40), the impact surface (5) being on a side of the volume chamber (28) opposite the discharge end (31) of the mixing chamber (30), and is atomised through said at least one nozzle (24), said impact surface (5) being spaced from said discharge end (31) by an amount equal to about one to three times the inside diameter (D) of the mixing chamber (30).

2. An atomiser according to claim 1, wherein the angle (B) at which said at least one entry port (22) extends towards the axis (40) of the mixing chamber (30) is from 10° to 170°.

3. An atomiser according to claim 1 or claim 2, wherein said at least one entry port (22) is spaced upstream from said discharge end (31) of the mixing chamber (30) at a distance sufficient to prevent detrimental phase separation of the homogenised mixture constituents.

4. An atomiser according to claim 1 or claim 2, wherein said at least one entry port (22) is spaced upstream from said discharge end (31) of the mixing chamber (30) by from one to five times the inside diameter (D) of the mixing chamber (30).

5. An atomiser according to claim 5, including a wear pad (5) connected to said end cap (1) and carrying said impact surface.

6. An atomiser according to any one of the preceding claims, wherein the spray head (2) and the end cap (1) have tapering mating surfaces (38) which match each other to within +0.5 x to seal the end cap to the spray head to close the volume chamber (28).

7. An atomiser according to any one of the preceding claims, including a wear insert (4) lining said at least one nozzle (24).

8. An atomiser according to any one of the preceding claims, including an inner barrel (17) for conveying one of the fluids, the inner barrel (17) being connected to said entry end (33) of the mixing chamber (30), and an outer barrel (11) connected to the mixing chamber housing (7) and defining an annular space (26) with the inner barrel (17) for conveying the other fluid, said annular space (26) communicating with said at least one entry port (22) for supplying the other fluid into the mixing chamber (30).

9. An atomiser according to any one of the preceding claims, wherein the diameter of said circle is from one to three times the inside diameter (D) of the mixing chamber (30) plus the inside diameter of said at least one nozzle (24).

10. An atomiser according to any one of the preceding claims, including from one to four entry ports (22) extending into the mixing chamber (30), the size of the entry ports (22) being selected to establish a flow velocity of an atomising fluid through the entry ports (22) within the range of 30.5 to 152.4 m/s (100 to 500 ft/s), said entry end (33) of the mixing chamber (30) having a diameter selected to permit a flow velocity of the other fluid of from 0.15 to 9.0 m/s (0.5 to 29.5 ft/s), the mixing chamber (30) being cylindrical and the inside diameter (D) of the mixing chamber (30) being selected so that a homogenised mixture of the two fluids moves through the mixing chamber at a velocity of about 30.5 to 91.4m/s (100 to300ft/s).

11. An atomiser comprising: a housing (7) defining a cylindrical mixing chamber (30) having an inside diameter (D), an open entry end (33) for a slurry or fluidised dry powder, and an open discharge end (31), the housing (7) having a plurality of ports (22) extending at an angle (B) of 45° with respect to an axis (40) of the mixing chamber (30) into the mixing chamber (30), the ports (22) being spaced upstream of said discharge end (31) by from one to five times the inside diameter (D) of the mixing chamber (30) and being spaced downstream of said entry end (33); a spray head (2) engaged around said discharge end (31) and having a conical inner surface partially defining a volume chamber (28) having a diameter which is larger than the diameter (D) of the mixing chamber (30) communicating with said discharge end (31); and an end cap (1) having a conical recess therein engaged over the spray head (2) for enclosing the volume chamber (28), the end cap (1) having a plurality of nozzles (24) extending therethrough, the nozzles (24) communicating with the volume chamber (28), and the end cap (1) having an impact surface around which the nozzles (24) are distributed, said impact surface being spaced from said discharge end (31) by at least one mixing chamber diameter (D) and extending substantially perpendicular to said axis (40) of the mixing chamber (30);
wherein each of the nozzles (24) has an entry end (25) with a centre, said centres of the entry ends of the nozzles lying outboard of a circle having a diameter at least equal to the inside diameter (D) of the mixing chamber (30) plus an inside diameter of one of the nozzles; and wherein the conical inner surface of the spray head surface has a circle of intersection with the end cap (1) which at least encompasses outer edges of said entry ends (25) of the nozzles (24).

## Patentansprüche

1. Zerstäuber für das Zusammenmischen und Zerstäuben von mindestens zwei Flüssigkeiten, wobei der Zerstäuber aufweist:
ein Mischkammergehäuse (7), welches eine Mischkammer (30) mit einem offenen Eintrittsende (33) zur Aufnahme einer dieser Flüssigkeiten und einem offenen Auslaßende (31) definiert, wobei die Mischkammer (30) eine Achse (40) und einen inneren Durchmesser (D) hat und das Mischkammergehäuse (7) mindestens eine Eintrittsöffnung (22) zum Hineinlassen der anderen Flüssigkeit in die Mischkammer (30) hat, wobei die Eintrittsöffnung (22) sich gegen die Achse (40) der Mischkammer (30) unter einem Winkel (B) erstreckt und stromaufwärts von dem Auslaßende (31) und stromabwärts von dem Eintrittsende (33) bezüglich einer Strömung der ersten Flüssigkeit entlang dieser Achse (40) beabstandet ist;
eine Erweiterungskammer (28), die mit dem Auslaßende (31) der Mischkammer (30) in Verbindung steht und an dieses angrenzt, wobei die Erweiterungskammer (28) einen Durchmesser hat, der größer ist als der innere Durchmesser (D) der Mischkammer (30), wobei die Erweiterungskammer (28) festgelegt wird durch einen Sprühkopf (2), der um das Auslaßende (31) der Mischkammer (30) herum mit diesem in Eingriff steht und eine innere konische Oberfläche hat, die einen Teil der Erweiterungskammer (28) definiert und eine Endkappe (1) hat, die eine konische Aussparung hat, die einen anderen Teil der Erweiterungskammer (28) definiert und die über den Sprühkopf hinweg mit diesem in Eingriff steht und mindestens eine Zerstäubungsdüse (24) hat, die ein mit der Erweiterungskammer (28) in Verbindung stehendes Eintrittsende (25) hat und außerhalb der Peripherie des Auslaßendes (31) der Mischkammer (30) angebracht ist, wobei das Eintrittsende (25) dieser mindestens einen Düse (24) einen Mittelpunkt hat, der auf einem um die Achse (40) geschlagenen Kreis liegt, wobei der Durchmesser dieses Kreises senkrecht zu dieser Achse (40) verläuft und größer ist als die Summe aus dem Innendurchmesser (D) der Mischkammer und dem Innendurchmesser dieser wenigstens einen Düse (24), wobei die konische Oberfläche des Sprühkopfes (2) die innere Oberfläche der Endkappe (1) in einem Berührungskreis (36) schneidet, der die äußere Kante des Eintrittsendes dieser wenigstens einen Düse (24) mit einer Toleranz von bis zu 6,35 mm umfasst; und
wodurch die erste und die zweite Flüssigkeit in der Mischkammer (30) zusammengemischt werden, um eine gründlich homogenisierte Mischung zu bilden, die in die Erweiterungskammer (28) übergeht und gegen eine Aufprallfläche (5) trifft, die sich auf der Endkappe (1) in der konischen Aussparung befindet und sich im wesentlichen senkrecht zu der Achse (40) erstreckt, wobei die Aufprallfläche (5) auf einer dem Auslaßende (31) der Mischkammer (30) gegenüberliegenden Seite der Erweiterungskammer (28) liegt; und wobei die Mischung durch diese mindestens eine Düse (24) zerstäubt wird, wobei die Aufprallfläche (5) von dem Auslaßende (31) einen Abstand hat, der ungefähr gleich dem Ein- bis Dreifachen des Innendurchmessers (D) der Mischkammer (30) ist.

2. Zerstäuber nach Anspruch 1, wobei der Winkel (B), unter dem sich die mindestens eine Eintrittssöffnung (22) gegen die Achse (40) der Mischkammer (30) erstreckt, zwischen 10° und 170° liegt.

3. Zerstäuber nach Anspruch 1 oder Anspruch 2, wobei die mindestens eine Eintrittsöffnung (22) stromaufwärts von dem Auslaßende (31) der Mischkammer (30) einen Abstand hat, der ausreicht, eine nachteilige Phasentrennung der homogenisierten Mischungsbestandteile zu verhindern.

4. Zerstäuber nach Anspruch 1 oder Anspruch 2, wobei die mindestens eine Eintrittsöffnung (22) stromaufwärts von dem Auslaßende (31) der Mischkammer (30) einen Abstand hat, der dem Ein- bis Fünffachen des inneren Durchmessers (D) der Mischkammer (30) entspricht.

5. Zerstäuber nach Anspruch 1 mit einem Verschleißkissen (5), das mit der Endkappe (1) verbunden ist und die Aufprallfläche trägt.

6. Zerstäuber nach einem der vorhergehenden Ansprüche, bei dem der Sprühkopf (2) und die Endkappe (1) kegelförmige, aufeinanderpassende Oberflächen (38) haben, die bis auf 0,5° aufeinander passen, um den Sprühkopf mit der Endkappe zu verschließen, um die Erweiterungskammer (28) abzuschließen.

7. Zerstäuber nach einem der vorhergehenden Ansprüche mit einem Verschleißeinsatz (4), der die mindestens eine Düse (24) auskleidet.

8. Zerstäuber nach einem der vorhergehenden Ansprüche mit einem inneren Rohr (17) zur Beförderung einer der Flüssigkeiten, wobei das innere Rohr (17) mit dem Eintrittsende (33) der Mischkammer (30) verbunden ist; und mit einem äußeren Rohr (11), welches mit dem Mischkammergehäuse (7) verbunden ist und mit dem inneren Rohr (17) einen ringförmigen Raum (26) zur Beförderung der anderen Flüssigkeit definiert, wobei dieser ringförmige Raum (26) mit der mindestens einen Eintrittsöffnung (22) in Verbindung steht, um die andere Flüssigkeit in die Mischkammer (30) zu befördern.

9. Zerstäuber nach einem der vorhergehenden Ansprüche, wobei der Durchmesser des erwähnten Kreises das Ein- bis Dreifache des Innendurchmessers (D) der Mischkammer (30) plus dem Innendurchmesser der mindestens einen Düse (24) beträgt.

10. Zerstäuber nach einem der vorhergehenden Ansprüche mit ein bis vier Eintrittsanschlüssen (22), die sich in die Mischkammer (30) erstrecken, wobei die Abmessungen der Eintrittsanschlüsse (22) so gewählt werden, daß sich eine Strömungsgeschwindigkeit einer Zerstäubungsflüssigkeit durch die Eintrittsöffnungen (22) im Bereich von 30,5 bis 152,4 m/s (100 bis 500 Fuß/Sekunde) einstellt, wobei das Eintrittsende (33) der Mischkammer (30) einen Durchmesser hat, der so gewählt wird, daß eine Strömungsgeschwindigkeit der anderen Flüssigkeit von 0,15 bis 9,0 m/s (0,5 bis 29,5 Fuß/Sekunde) ermöglicht wird, wobei die Mischkammer (30) zylindrisch ist und der Innendurchmesser (D) der Mischkammer (30) so gewählt wird, daß eine homogenisierte Mischung der zwei Flüssigkeiten sich durch die Mischkammer mit einer Geschwindigkeit von ungefähr 30,5 bis 91,4 m/s (100 bis 300 Fuß/Sekunde) bewegt.

11. Zerstäuber mit: einem Gehäuse (7), welches eine zylindrische Mischkammer (30) mit einem inneren Durchmesser (D), einem offenen Eintrittsende (33) für eine Aufschwemmung oder ein fluidisiertes Trockenpulver und mit einem offenen Auslaßende (31) definiert, wobei das Gehäuse (7) mehrere Anschlüsse (22) hat, die sich unter einem Winkel (B) von 45° bezüglich einer Achse (40) der Mischkammer (30) in die Mischkammer (30) erstrecken, wobei die Anschlüsse (22) stromaufwärts von dem Auslaßende (31) mit dem Ein- bis Fünffachen des Innendurchmessers (D) der Mischkammer (30) und stromabwärts von dem Eintrittsende (33) beabstandet sind; einem Sprühkopf (2), der um das Auslaßende (31) herum mit diesem in Eingriff steht und eine innere konische Oberfläche hat, die teilweise eine Erweiterungskammer (28) definiert, die einen Durchmesser hat, der größer ist als der Durchmesser (D) der Mischkammer (30) und die mit diesem Auslaßende (31) in Verbindung steht; und einer Endkappe (1) mit einer konischen Aussparung darin, die den Sprühkopf (2) übergreifend mit diesem in Eingriff steht, so daß sie die Erweiterungskammer (28) umschließt, wobei die Endkappe (1) mehrere durch sie hindurchgehende Düsen (24) hat, wobei die Düsen (24) mit der Erweiterungskammer (28) in Verbindung stehen, und wobei die Endkappe (1) eine Aufprallfläche hat, um die herum die Düsen verteilt sind, wobei diese Aufprallfläche von dem Auslaßende (31) einen Abstand hat, der mindestens gleich einem Durchmesser (D) der Mischkammer (30) ist, und wobei sie sich im wesentlichen senkrecht zu der Achse (40) der Mischkammer (30) erstreckt;
wobei jede der Düsen (24) ein Eintrittsende (25) mit einem Zentrum hat, wobei diese Zentren der Düseneintrittsenden an der Außenseite eines Kreises liegen, der einen Durchmesser aufweist, der mindestens gleich dem Innendurchmesser (D) der Mischkammer (30) plus dem Innendurchmesser einer der Düsen ist; und wobei die konische innere Fläche der Sprühkopfoberfläche sich mit der Endkappe (1) in einem Kreis schneidet, der mindestens die äußeren Kanten der Eintrittsenden (25) der Düsen (24) umfasst.

## Revendications

1. Atomiseur pour mélanger et atomiser au moins deux fluides, l'atomiseur comprenant :
un logement de chambre de mélange (7) définissant une chambre de mélange (30) avec une extrémité d'entrée ouverte (33) pour recevoir un desdits fluides et une extrémité d'évacuation ouverte (31), la chambre de mélange (30) comportant un axe (40) et un diamètre interne (D), et le logement de chambre de mélange (7) comportant au moins une lumière d'entrée (22) pour admettre l'autre fluide dans la chambre de mélange (30), la lumière d'entrée (22) s'étendant vers ledit axe (40) de la chambre de mélange (30) à un angle (B) et étant espacé en amont de ladite extrémité d'évacuation (31) et en aval de ladite extrémité d'entrée (33) relativement à un flux du premier fluide le long dudit axe (40);
une chambre de volume (28) communiquant avec ladite extrémité d'évacuation (31) de la chambre de mélange (30) et adjacente à cette extrémité, la chambre de volume (28) ayant un diamètre qui est supérieur au diamètre interne (D) de la chambre de mélange (30), la chambre de volume (28) étant définie par une tête de pulvérisation (2) engagée autour de l'extrémité d'évacuation (31) de la chambre de mélange (30) et comportant une surface interne conique définissant une partie de la chambre de volume (28) et un bouchon d'extrémité (1) comportant un évidement conique en son sein définissant une autre partie de la chambre de volume (28) et engagé sur la tête de pulvérisation et comportant au moins une buse d'atomisation (24) comportant une extrémité d'entrée (25) communiquant avec la chambre de volume (28) et étant disposée à l'extérieur d'une périphérie de ladite extrémité d'évacuation (31) de la chambre de mélange (30), ladite extrémité d'entrée (25) de ladite au moins une buse (24) comportant un point central situé sur un cercle centré sur ledit axe (40), le diamètre dudit cercle étant perpendiculaire audit axe (40) et supérieur à la somme du diamètre interne (D) de la chambre de mélange et du diamètre interne de ladite au moins une buse (24), la surface conique de la tête de pulvérisation (2) coupant la surface interne du bouchon d'extrémité (1) en un cercle tangentiel (36) qui englobe le bord extérieur de l'extrémité d'entrée de ladite au moins une buse (24) avec une tolérance allant jusqu'à 6,35 mm; et
de sorte que le premier et le second fluides soient mélangés dans la chambre de mélange (30) pour former un mélange parfaitement homogène qui passe dans la chambre de volume (28) et heurte une surface d'impact (5) définie sur le bouchon d'extrémité (1) dans l'évidement conique et s'étendant sensiblement perpendiculairement audit axe (40), la surface d'impact (5) se trouvant sur un côté de la chambre de volume (28) à l'opposé de l'extrémité d'évacuation (31) de la chambre de mélange (30), et est atomisé via ladite au moins une buse (24), ladite surface d'impact (5) étant espacée de ladite extrémité d'évacuation (31) d'une distance égale à environ une à trois fois le diamètre interne (D) de la chambre de mélange (30).

2. Atomiseur selon la revendication 1, dans lequel l'angle (B) auquel ladite au moins une lumière d'entrée (22) s'étend vers l'axe (40) de la chambre de mélange (30) est compris entre 10° et 170°.

3. Atomiseur selon la revendication 1 ou 2, dans lequel ladite au moins une lumière d'entrée (22) est espacée en amont de ladite extrémité d'évacuation (31) de la chambre de mélange (30) d'une distance suffisante pour empêcher une séparation de phases indésirable des constituants du mélange homogène.

4. Atomiseur selon la revendication 1 ou 2, dans lequel ladite au moins une lumière d'entrée (22) est espacée en amont de ladite extrémité d'évacuation (31) de la chambre de mélange (30) d'une à cinq fois le diamètre interne (D) de la chambre de mélange (30).

5. Atomiseur selon la revendication 1, comprenant un tampon d'usure (5) relié audit bouchon d'extrémité (1) et supportant ladite surface d'impact.

6. Atomiseur selon l'une quelconque des revendications précédentes, dans lequel la tête de pulvérisation (2) et le bouchon d'extrémité (1) comportent des surfaces de jointement coniques (38) qui s'épousent à +0,5° près pour sceller hermétiquement le bouchon d'extrémité à la tête de pulvérisation afin de fermer la chambre de volume (28).

7. Atomiseur selon l'une quelconque des revendications précédentes, comprenant une garniture d'usure (4) tapissant ladite au moins une buse (24).

8. Atomiseur selon l'une quelconque des revendications précédentes, comprenant un cylindre interne (17) pour transporter l'un des fluides, le cylindre interne (17) étant relié à ladite extrémité d'entrée (33) de la chambre de mélange (30), et un cylindre externe (11) relié au logement de chambre de mélange (7) et définissant un espace annulaire (26) avec le cylindre interne (17) pour transporter l'autre fluide, ledit espace annulaire (26) communiquant avec ladite au moins une lumière d'entrée (22) pour distribuer l'autre fluide dans la chambre de mélange (30).

9. Atomiseur selon l'une quelconque des revendications précédentes, dans lequel le diamètre dudit cercle est d'une à trois fois le diamètre interne (D) de la chambre de mélange (30) plus le diamètre interne de ladite au moins une buse (24).

10. Atomiseur selon l'une quelconque des revendications précédentes, comprenant une à quatre lumières d'entrée (22) s'étendant dans la chambre de mélange (30), la dimension des lumières d'entrée (22) étant sélectionnée pour créer une vitesse d'écoulement d'un fluide d'atomisation dans les lumières d'entrée (22) comprise entre 30,5 et 152,4 m/s (100 à 150 pieds/s), ladite extrémité d'entrée (33) de la chambre de mélange (30) ayant un diamètre sélectionné pour permettre une vitesse d'écoulement de l'autre fluide comprise entre 0,15 et 9 m/s (0,5 à 29,5 pieds/s), la chambre de mélange (30) étant cylindrique et le diamètre interne (D) de la chambre de mélange (30) étant sélectionné de manière qu'un mélange homogène des deux fluides se déplace dans la chambre de mélange à une vitesse d'environ 30,5 à 91,4 m/s (100 à 300 pieds/s).

11. Atomiseur comprenant : un logement (7) définissant une chambre de mélange cylindrique (30) comportant un diamètre interne (D), une extrémité d'entrée ouverte (33) pour une bouillie ou poudre sèche fluidisée, et une extrémité d'évacuation ouverte (31), le logement (7) comportant une pluralité de lumières (22) s'étendant à un angle (B) de 45° par rapport à un axe (40) de la chambre de mélange (30) dans la chambre de mélange (30), les lumières (22) étant espacées en amont de ladite extrémité d'évacuation (31) d'une à cinq fois le diamètre interne (D) de la chambre de mélange (30) et étant espacées en aval de ladite extrémité d'entrée (33); une tête de pulvérisation (2) engagée autour de ladite extrémité d'évacuation (31) et comportant une surface interne conique définissant partiellement une chambre de volume (28) ayant un diamètre qui est supérieur au diamètre (D) de la chambre de mélange (30) et communiquant avec ladite extrémité d'évacuation (31); et un bouchon d'extrémité (1) comportant un évidement conique en son sein engagé sur la tête de pulvérisation (2) afin de fermer la chambre de volume (28), le bouchon d'extrémité (1) comportant une pluralité de buses (24) s'étendant à travers lui, les buses (24) communiquant avec la chambre de volume (28), et le bouchon d'extrémité (1) comportant une surface d'impact autour de laquelle les buses (24) sont réparties, ladite surface d'impact étant espacée de ladite extrémité d'évacuation (31) d'une distance égale à au moins un diamètre (D) de la chambre de mélange et s'étendant sensiblement perpendiculairement audit axe (40) de la chambre de mélange (30);
dans lequel chacune des buses (24) comporte une extrémité d'entrée (25) avec un centre, lesdits centres des extrémités d'entrée des buses étant situés à l'extérieur d'un cercle ayant un diamètre au moins égal au diamètre interne (D) de la chambre de mélange (30) plus un diamètre interne de l'une des buses; et dans lequel la surface interne conique de la surface de la tête de pulvérisation comporte un cercle d'intersection avec le bouchon d'extrémité (1) qui englobe au moins les bords extérieurs desdites extrémités d'entrée (25) des buses (24).
